Europäisches Patentamt

European Patent Office

Office européen des brevets

(19)

(11) **EP 0 617 263 B1**

(12) **EUROPÄISCHE PATENTSCHRIFT**

(45) Veröffentlichungstag und Bekanntmachung des Hinweises auf die Patenterteilung:
**11.06.1997  Patentblatt 1997/24**

(51) Int Cl.⁶: **G01J 5/52**

(21) Anmeldenummer: **94102584.3**

(22) Anmeldetag: **21.02.1994**

(54) **Messgerät (Pyrometer)**

Measuring device (Pyrometer)

Appareil de mesure (Pyromètre)

(84) Benannte Vertragsstaaten:
**DE FR GB IT**

(30) Priorität: **25.03.1993  DE 4309762**

(43) Veröffentlichungstag der Anmeldung:
**28.09.1994  Patentblatt 1994/39**

(73) Patentinhaber: **Raytek GmbH**
**13189 Berlin (DE)**

(72) Erfinder:
- **Kienitz, Ulrich, Dr.**
**D-12689 Berlin (DE)**
- **Heinke, Thomas, Dr.-Ing.**
**D-10315 Berlin (DE)**
- **Klonowski, Uwe, Dipl.-Ing.**
**D-13088 Berlin (DE)**
- **Preuss, Peter**
**D-12459 Berlin (DE)**
- **Sandring, Holger, Dr.-Ing.**
**D-12627 Berlin (DE)**
- **Schmidt, Volker, Dipl.-Phys.**
**D-12627 Berlin (DE)**

(74) Vertreter: **Tetzner, Volkmar, Dr.-Ing. Dr. jur.**
**Van-Gogh-Strasse 3**
**81479 München (DE)**

(56) Entgegenhaltungen:
DE-A- 2 503 259           DE-C- 973 495
GB-A- 2 082 767           US-A- 3 916 690
US-A- 4 144 758

**Beschreibung**

Die Erfindung betrifft ein Meßgerät zum Messen der von einem Objekt emittierten elektromagnetischen Strahlung, insbesondere ein Pyrometer, gemäß dem Oberbegriff des Anspruches 1.

Ein Meßgerät gemäß dem Oberbegriff des Anspruches 1 ist aus der US-A-4 144 758 bekannt. Bei diesem bekannten Gerät kann die Temperatur eines Produktes in einem Ofen gemessen werden, wobei im Ofen ein auf einer bestimmten Temperatur gehaltenes Referenzelement angeordnet wird. Außerhalb des Ofens ist das eigentliche Meßgerät vorgesehen, das aus einem optischen System sowie zwei Detektoren besteht, wobei die vom Objekt ausgehende Strahlung zum einen Detektor und die vom Referenzelement ausgehende Strahlung zum anderen Detektor gelangt. Die Ausgangssignale der beiden Detektoren werden unter Differenzbildung verarbeitet.

In der US-A-3 916 690 wird ein Meßgerät beschrieben, bei dem einem Detektor abwechselnd die Strahlung eines Meßobjektes und die Strahlung des Gehäuses des Meßgerätes zugeführt wird. Stellt der Detektor eine Temperaturdifferenz fest, so wird das Gehäuse entsprechend gekühlt bzw. erhitzt, bis sich ein Temperaturgleichgewicht zwischen Meßobjekt und Gehäuse einstellt. Mit einem Kontakt fühler wird dann die Temperatur des Gehäuses und damit die Temperatur des Meßobjektes gemessen.

Aus der Praxis sind ferne Pyrometer bekannt, die einen Einelementdetektor enthalten, dem die von einem Objekt emittierte Temperaturstrahlung mittels eines optischen Systems zugeführt wird. Dabei ergibt sich jedoch das Problem, daß die Temperatur-Eigenstrahlung des optischen Systems in das Ausgangssignal des Detektors mit eingeht. Zur Verringerung der Eigenstrahlung des abbildenden optischen Systems wurde bei refraktiven Optiken die Verwendung von hochwertigen, schwach absorbierenden Materialien und bei reflektiven Optiken die Benutzung von sehr gut reflektierenden Oberflächen vorgeschlagen.

Eine andere Möglichkeit besteht in der elektronischen Kompensation des Signals, wenn man die Temperatur des optischen Systems kennt. Zu diesem Zweck hat man in einem Pyrometer einen zweiten Detektor vorgesehen, der durch ein unmittelbar davor angeordnetes Referenzelement abgedeckt wird, so daß die von diesem ausgehende Referenzstrahlung auf den zweiten Detektor fällt. Über einen entsprechend angeordneten Temperaturfühler kann die Temperatur im Meßgerät ermittelt werden, die dann bei der Verarbeitung der Ausgangs-signale der beiden Detektoren in einer entsprechenden Einrichtung berücksichtigt.

Diese elektronische Kompensation ist jedoch bei einer ungleichmäßigen Temperaturverteilung innerhalb des optischen Systems, wie sie beispielsweise bei schockartigen Änderungen der Umgebungstemperatur auftritt, nicht geeignet. Derartige Temperaturänderungen können beispielsweise dadurch auftreten, daß das Gerät in die Hand genommen wird.

Der Erfindung liegt daher die Aufgabe zugrunde, das Meßgerät gemäß dem Oberbegriff des Anspruches 1 derart weiterzuentwickeln, daß auch bei schockartigen Änderungen der Umgebungstemperatur die Eigenstrahlung des optischen Systems wirksam kompensiert wird.

Diese Aufgabe wird erfindungsgemäß durch die kennzeichnenden Merkmale des Anspruches 1 gelöst, indem die beiden Detektoren, das optische System und das Referenzelement in einem eine Eintrittsöffnung aufweisenden Gehäuse angeordnet sind, wobei die vom Referenzelement ausgehende Strahlung durch das optische System dem zweiten Detektor zugeführt wird. Dadurch fällt nach der Differenzbildung der Ausgangssignale der beiden Detektoren die Komponente der Eigenstrahlung des optischen Systems heraus, so daß sich ein von der Temperatur des optischen Systems unabhängiges Meßsignal ergibt.

Gemäß der Erfindung können sowohl gleichlichtempfindliche als auch wechsellicht-empfindliche Detektoren verwendet werden.

Weitere Ausgestaltungen der Erfindung sind Gegenstand der Unteransprüche.

Zwei Ausführungsbeispiele der Erfindung werden anhand der Zeichnung und der nachfolgenden Beschreibung näher erläutert.

In der Zeichnung zeigen:

Fig.1    ein erstes Ausführungsbeispiel eines Meßgerätes;

Fig.2    ein zweites Ausführungsbeispiel des Meßgerätes;

Fig.3    eine Vorderansicht eines Modulators;

Fig.4    einen Digital-Analog-Umsetzer.

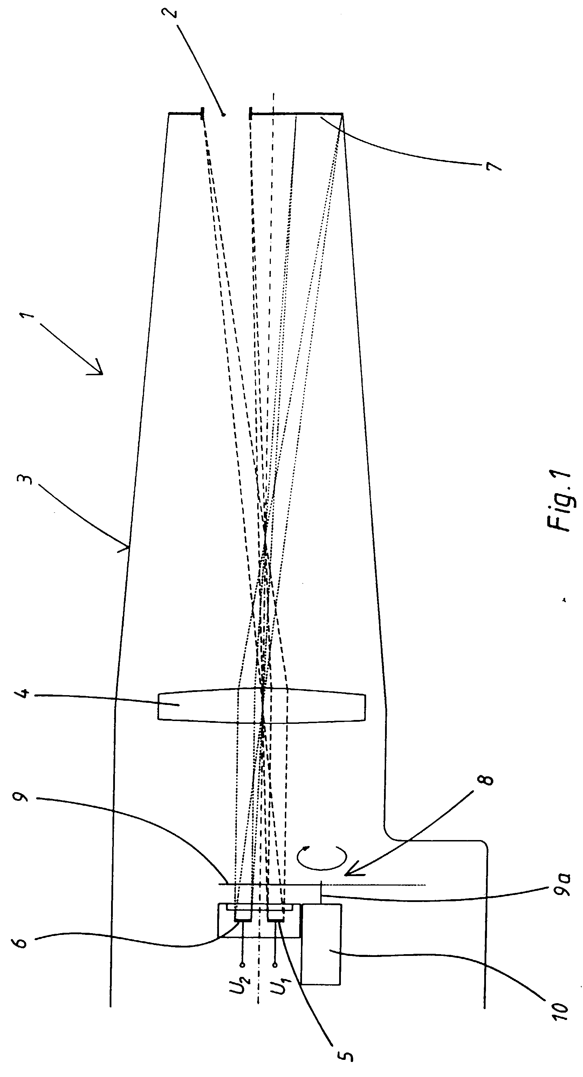

Das in Fig.1 dargestellte Meßgerät 1 besteht im wesentlichen aus einem eine Eintrittsöffnung 2 aufweisenden Gehäuse 3, einem optischen System 4, einem ersten Detektor 5, einem zweiten Detektor 6 sowie einem Referenzelement 7.

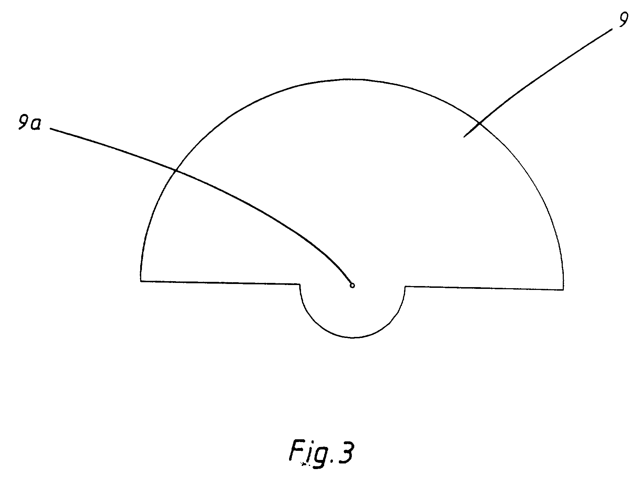

Für die Detektoren 5, 6 können sowohl gleichlichtals auch wechsellicht-empfindliche Detektoren verwendet werden. Im ersten Ausführungsbeispiel gemäß der Fig.1 sind wechsellicht-empfindliche Detektoren vorgesehen. Dies wiederum bedingt, daß ein optischer Modulator 8 periodisch in den Strahlengang zwischen der Eintrittsöffnung 2 und den beiden Detektoren 5, 6 eingebracht wird. Gemäß der vorliegenden Erfindung wird der Modulator zweckmäßig zwischen dem optischen System 4 und den beiden Detektoren 5, 6 angeordnet. Für die nähere Ausgestaltung des Modulators 8 wird auf die Ausführungen zu Fig.3 verwiesen.

Das in Fig.1 vereinfacht dargestellte optische System 4 bildet einerseits die Eintrittsöffnung 2 auf die Detektorfläche des ersten Detektors 5 und andererseits das Referenzelement auf die Detektorfläche des zweiten Detektors 6 ab. Wird das Meßgerät 1 mit seiner Eintrittsöffnung 2 auf ein zu messendes Objekt ausgerichtet, ergeben sich an den beiden Detektoren 5, 6 folgende Ausgangssignale:

$$U_1 = S_1 * (I_{Obj} + I_{Opt} - I_{Mod})$$

$$U_2 = S_2 * (I_{Ref} + I_{Opt} - I_{Mod})$$

mit:

$U_1$: elektrisches Ausgangssignal des ersten Detektors 5;

$U_2$: elektrisches Ausgangssignal des zweiten Detektors 6;

$S_1$: Strahlungsempfindlichkeit des ersten Detektors 5;

$S_2$: Strahlungsempfindlichkeit des zweiten Detektors 6;

$I_{obj}$: Strahlungsintensität der vom Objekt emittierten und durch die Entrittsöffnung 2 in das Meßgerät eintreffende elektromagnetische Strahlung;

$I_{Ref}$: Intensität der Eigenstrahlung des Referenzelementes 7;

$I_{Opt}$: Intensität der Eigenstrahlung des optischen Systems 4;

$I_{Mod}$: Intensität der Eigenstrahlung des optischen Modulators 8.

Die beiden Ausgangssignale $U_1$, $U_2$ der beiden Detektoren 5, 6 werden einer in Fig.1 nicht näher dargestellten Einrichtung zugeführt, die die beiden Signale unter Differenzbildung verarbeitet.

Bei der Verarbeitung der beiden Ausgangssignale wird die bekannte Temperatur des Referenzelementes 7 berücksichtigt. Diese Temperatur kann durch jede geeignete, mit dem Referenzelement in Verbindung stehenden Einrichtung ermittelt werden.

Unter der Annahme, daß die Strahlungsempfindlichkeiten $S_1$, $S_2$ der beiden Detektoren 5, 6 gleich sind, ergibt die Differenzbildung der beiden Ausgangssignale:

$$U_{Meß} = U_1 - U_2 = S * (I_{Obj} - I_{Ref})$$

wobei

$$S = S_1 = S_2$$

Das auf diese Weise ermittelte Meßsignal $U_{Meß}$ ist somit unabhängig von der Eigenstrahlung des optischen Systems 4 und der Eigenstrahlung des Modulators 8. Dies bedeutet, daß sich die Temperaturen des optischen Systems 4, des Modulators 5 und des Referenzelementes 7 unterscheiden können, ohne daß dadurch ein Einfluß auf das Meßsignal entsteht. Das Meßgerät ermöglicht daher auch dann eine zuverlässige Strahlungsmessung, wenn im Meßgerät 1 eine ungleichmäßige Temperaturverteilung gegeben ist, wie sie beispielsweise bei schockartigen Änderungen der Umgebungstemperatur auftritt.

Die der Erfindung zugrundeliegenden Versuche haben gezeigt, daß der sich durch eine schockartige Veränderung der Umgebungstemperatur ergebende Meßfehler, ohne die erfindungsgemäße Kompensation, bei etwa 10 K liegt. Mit einem erfindungsgemäßen Meßgerät verbleibt lediglich ein Restfehler von ungefähr 1,5 K. Dieser Restfehler ist insbesondere durch die unterschiedlichen Strahlungsempfindlichkeiten der beiden Detektoren 5, 6 bedingt.

Dieser Restfehler kann beispielsweise durch Detektoren weiter gesenkt werden, die elektronisch aufeinander abgestimmt werden.

Eine weitere Verringerung des Restfehlers kann dadurch erreicht werden, daß die thermische Zeitkonstante des Modulators 8 an die des optischen Systems möglichst gut angepaßt wird.

Der optische Modulator 8 besteht im wesentlichen aus einer in Fig.3 dargestellten, halbkreisförmigen Modulatorscheibe 9, die von einem Miniatur-Rotations-Schrittmotor 10 um eine Achse 9a rotiert. Dieser Schrittmotor 10 ist in unmittelbarer Nähe der beiden Detektoren 5, 6 derart angeordnet, daß er in einer Stellung mit der Modulatorscheibe 9, die den strahlungsundurchlässigen Bereich des Modulators bildet, die beiden Detektoren abdeckt. In dieser Stellung kann somit keine Strahlung durch das optische System 4 zu den beiden Detektoren 5, 6 gelangen. Bei einer Drehung um 180° kommt der strahlungsdurchlässige Bereich des Modulators 8 in den Strahlengang. Dieser Bereich wird in einfacher Weise dadurch erzeugt, daß die Modulatorscheibe 9 lediglich als halbkreisförmige Scheibe ausgebildet ist.

Um auf ein Lageerkennungssystem für die Modulatorscheibe 9 verzichten zu können, weist der Schrittmotor 10 vorzugsweise zwei Stellungen auf. In der einen Stellung befindet sich der strahlungsundurchlässige Bereich reich und in der anderen der strahlungsdurchlässige im Strahlengang zwischen dem optischen System und den beiden Detektoren 5, 6. Diese beiden Stellungen sind wiederholt herstellbar, da die Stromrichtung durch die Motorwicklung die beiden Winkelpositionen des Modulators 8 definieren.

Ein weiterer Vorteil derartiger Miniatur-Rotations-Schrittmotoren 10 besteht in dem sehr geringen Energieverbrauch. Dies bedeutet jedoch auch, daß eine Modulatorscheibe 9 Verwendung finden muß, die sich durch ein sehr geringes Gewicht auszeichnet.

Dies wird dadurch erreicht, daß für die Modulator-Scheibe 9 ein Trägermaterial aus Polyethylene rephthalate verwendet wird, das sowohl auf der lungszugewandten als auch auf der strahlungsabgewandten Seite mit einem metallischen Material beschichtet ist. Diese Modulatorscheibe 9 zeichnet sich einerseits durch ihr geringes Gewicht und andererseits durch eine ausreichende Steifigkeit bei verschiedenen Temperaturen und Luftfeuchten aus. Ferner ist die Modulator-Scheibe 9 für elektromagnetische Strahlung, insbesondere im infraroten Bereich, undurchlässig.

Die metallische Beschichtung gewährleistet weiterhin eine gute Wärmeleitfähigkeit, so daß es gelingt, die thermische Zeitkonstante der Modulatorscheibe 9 gegenüber herkömmlichen Modulatorscheiben deutlich zu senken und der thermischen Zeitkonstante des optischen Systems stems 4 anzupassen. Dadurch wird der durch schiedliche Empfindlichkeiten der beiden Detektoren bedingte Restfehler im Meßsignal weiter verkleinert, wenn sich die Umgebungstemperatur schockartig ändert.

Die in Fig.3 dargestellte Form der Modulatorscheibe 9 kann jedoch auch in geeigneter Weise variiert werden, indem sie beispielsweise durch gegenüberliegend angeordnete Viertelkreissegmente gebildet wird.

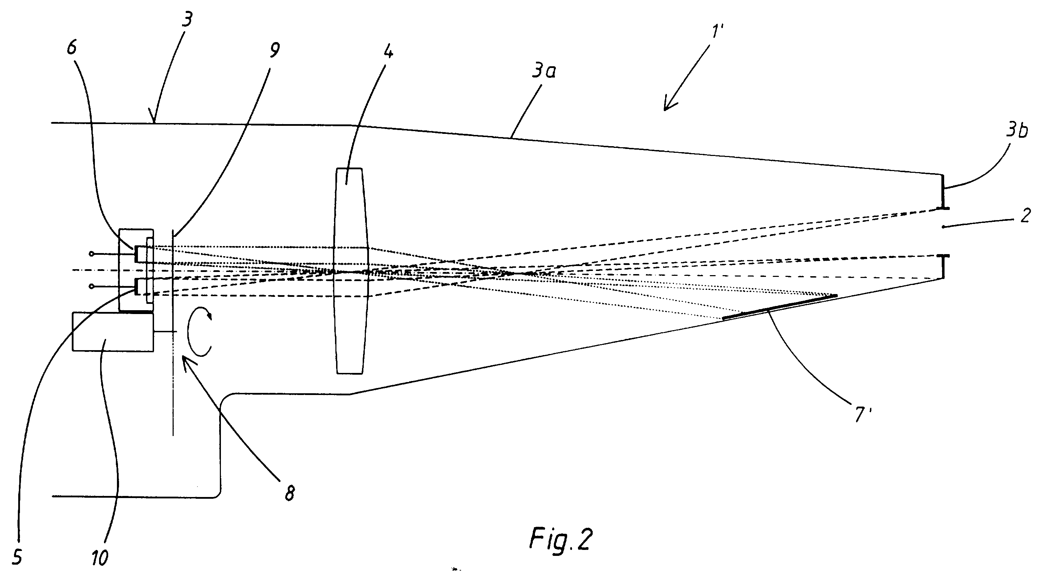

In Fig.2 ist ein zweites Ausführungsbeispiel eines Meßgerätes 1' dargestellt. Es hat im wesentlichen den gleichen Aufbau wie das erste Ausführungsbeispiel gemäß Fig.1, so daß für gleiche Teile die gleichen Bezugszeichen verwendet sind.

Ein wesentlicher Unterschied besteht in der Anordnung des Referenzelementes 7'. Die vom Referenzelement 7' abzubildende Fläche steht hier nicht mehr senkrecht zur Detektorfläche des zweiten Detektors 6. Dadurch ergibt sich eine unscharfe Projektion der Referenzfläche auf die Detektorfläche, die jedoch durch eine entsprechend größere Referenzfläche ausgeglichen wird.

Das Referenzelement 7' wird vorzugsweise an der Innenseite des Gehäuses 3 im Bereich der Eintrittsöffnung 2 angeordnet. Dadurch läßt sich das Gehäuse 3 in seinem vorderen Bereich 3a konisch verjüngen. Auf diese Weise wird die die Eintrittsöffnung enthaltende Stirnfläche 3b des Gehäuses 3 relativ klein. Dies wiederum ermöglicht ein relativ gutes und genaues Ausrichten des Meßgerätes auf ein zu untersuchendes Objekt. Das Meßgerät 1' eignet sich daher besonders für die Temperaturmessung bei Bauteilen auf Leiterplatten.

Mit den Meßgeräten 1, 1' sind aber prinzipiell auch Messungen anderer elektromagnetischer Strahlungen möglich. Bei entsprechender Eichung des Meßgerätes könnte beispielsweise die von einem Objekt abgegebene Wärmemenge ermittelt werden.

Der erste und zweite Detektor kann im Rahmen der Erfindung auch durch eine Vielzahl von Detektoren gebildet werden. Durch entsprechende Korrelationsrechnungen könnte dadurch eine Rauschminderung erreicht werden.

Bei vielen Anwendungen ist es erwünscht, daß das analoge Meßsignal in einem Rechner weiterverarbeitet wird. Dazu muß das analoge Meßsignal zunächst durch einen Analog-Digital-Umsetzer in ein digitales Meßsignal umgewandelt werden. Wird das vom Rechner aufbereitete Meßsignal wieder in analoger Form benötigt, so wird eine erneute Umsetzung durch einen Digital-Analog-Umsetzer vorgenommen.

Aus der Praxis sind Präzisions-Schaltungsanordnungen bekannt, durch die beide Funktionen realisiert werden können. Um von einem analogen Signal das entsprechende digitale Signal zu erhalten, wird ein Digital-Analog-Umsetzer derart verwendet, daß dessen Ausgangsspannung durch sukzessive Approximation solange verändert wird, bis sie vom analogen Signal weniger als einen Quantisierungsschritt abweicht. Das auf diese Weise ermittelte digitale Signal kann anschließend rechentechnisch aufbereitet werden.

Soll das rechentechnisch aufbereitete, digitale Signal wieder in ein analoges Signal umgewandelt werden, wird es als Eingangswert des Digital-Analog-Umsetzers verwendet.

Als Digital-Analog-Umsetzer werden für den genannten Zweck meistens schaltungstechnisch relativ einfach zu realisierende, invers betriebene R-2R-Widerstandsnetzwerke mit anschließendem Strom-Spannungswandler verwendet. Als Schalter für die einzelnen Schaltstufen werden üblicherweise elektronisch gesteuerte CMOS-Schalter eingesetzt.

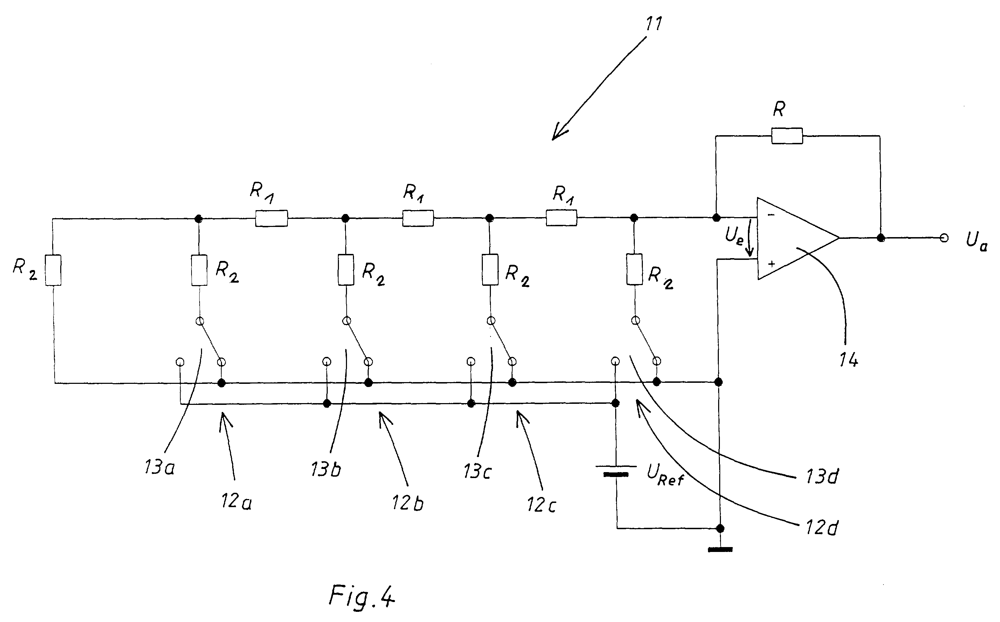

In Fig.4 ist ein Digital-Analog-Umsetzer 11 der obengenannten Art mit vier Schaltstufen 12a, 12b, 12c und 12d dargestellt. Die einzelnen Schaltstufen enthalten im wesentlichen jeweils einen Schalter 13a bis 13d und wenigstens einen Widerstand $R_1$, $R_2$.

Die in der Schaltungsanordnung gemäß Fig.4 verwendeten Widerstände $R_1$ und $R_2$ genügen der Bedingung:

$$R_2 = 2 R_1$$

Dadurch nimmt das Gewicht der einzelnen Schaltstufen 12a bis 12d von links nach rechts im Verhältnis 1 : 2 : 4 : 8 zu. Mit den Schaltern 13a bis 13d sind daher 16 verschiedene Stufen im Bereich von 0 bis zum 15-fachen des kleinsten Quantisierungsschrittes möglich.

Bei einer bestimmten Stellung der Schalter 13a bis 13d ergibt sich ein entsprechender Gesamtwiderstand, so daß sich über eine Referenzspannungsquelle mit der Spannung $U_{Ref}$ eine entsprechende Eingangsspannung $U_e$ an einem Stromspannungswandler 14 einstellt. Dieser wiederum erzeugt eine der Eingangsspannung

entsprechende Ausgangsspannung $U_a$, die als analoge Spannung dem durch die Schalter 13a bis 13d realisierten digitalen Signal entspricht.

Eine derartige Schaltungsanordnung kann theoretisch beliebig erweitert werden. Neben einer präzisen spannungsquelle erfordert sie vor allem Widerstände, die genau der Bedingung $R_2 = 2\,R_1$ genügt.

Bei der Verwendung eines Digital-Analog-Umsetzers im Zusammenhang mit dem oben beschriebenen Meßgerät, wird man beispielsweise 12 Schaltungsstufen benötigen, um in einer entsprechenden Genauigkeitsklasse arbeiten zu können.

Dabei stellt sich das Problem, daß der Umsetzer mit Einzelwiderständen marktüblicher Toleranzklassen nicht mit der gewünschten Präzision realisiert werden kann. Daher verwendet man im allgemeinen integrierte Netzwerke, die einem kostenintensiven Laserabgleich unterzogen werden.

Steht ein Rechner mit ausreichender Reserve bezüglich Rechenzeit und Speicherplatz zur Verfügung und muß ohnehin eine exemplarabhängige Gerätekalibrierung vorgenommen werden, liegt es nahe, die exakten Gewichte der einzelnen Schaltstufen zu bestimmen, zu speichern und bei nachfolgenden Analog-Digital- und Digital-Analog-Umsetzungen in die Fehlerkorrekturrechnung einzubeziehen.

Es hat sich jedoch gezeigt, daß sich dabei trotzdem sog. Bit-Fehler in der Umsetzer-Kennlinie ergeben können, wenn das Gewicht einer Schaltstufe mehr als eine Quantisierungsstufe über der Summe der Gewichte aller Stufen niedrigeren Gewichts liegt. Dadurch bedingt können einerseits einige Analog-Werte in diesem Fall gar nicht erzeugt werden und andererseits ergeben sich bei unterschiedlichen Schalterstellungen Analog-Werte, die sich um weniger als einen Quantisierungsschritt voneinander unterscheiden.

Der oben beschriebene Digital-Analog-Umsetzer wurde daher dahingehend weiterentwickelt, daß die obengenannten Nachteile vermieden werden.

Dies wird dadurch gelöst, daß das Verhältnis der Gewichte benachbarter Schaltstufen kleiner als 1 : 2 ist.

Damit werden zwar für einen bestimmten Quantisierungsbereich mehr Schaltstufen benötigt, da mehrere Analog-Werte, die sich um weniger als einen durch das kleinste Gewicht bestimmten Quantisierungsschritt voneinander unterscheiden, mit unterschiedlichen Schalterstellungen generiert werden können. Bei geeigneter Anpassung der Gewichtsverhältnisse benachbarter Schaltstufen an die Maximal-Toleranzen der Widerstände kann jedoch die obengenannte Lücke in der Umsetzer-Kennlinie vermieden werden.

Ein derartiger Digital-Analog-Umsetzer entspricht vom Aufbau der Darstellung gemäß Fig.4, wobei entsprechend der benötigten Genauigkeit weitere Schaltstufen vorgesehen werden können. Arbeitet man beispielsweise mit 16 Schaltstufen und kommen Widerstände zum Einsatz, die eine Abweichung von 5% vom Nennwert aufweisen, können die obengenannten Nachteile vermieden werden, wenn die Widerstände der folgenden Bedingung genügen:

$$R_1 / R_2 = 2{,}7 / 1$$

Auch wenn dieser Digital-Analog-Umsetzer für einen Einsatz mit dem Meßgerät 1, 1' geeignet ist, ist eine Anwendung desselben unabhängig vom Meßgerät denkbar.

**Patentansprüche**

1. Meßgerät (1, 1') zum Messen der von einem Objekt emittierten elektromagnetischen Strahlung, insbesondere Pyrometer, mit

    a) einem ersten Detektor (5),

    b) einem optischen System (4) zur Zuführung der Strahlung zum ersten Detektor,

    c) einem zweiten Detektor (6),

    d) einem Referenzelement (7, 7'), von dem ausgehende Referenzstrahlung auf den zweiten Detektor fällt,

    e) sowie einer Ausgangssignale der beiden Detektoren (5, 6) unter Differenzbildung verarbeitenden Einrichtung,

    dadurch gekennzeichnet, daß
    f) die beiden Detektoren (5, 6), das optische System (4) und das Referenzelement (7, 7') in einem eine Eintrittsöffnung (2) aufweisenden Gehäuse (3) angeordnet sind, wobei die vom Referenzelement (7, 7') ausgehende Referenzstrahlung durch das optische System (4) dem zweiten Detektor (6) zugeführt wird.

2. Meßgerät nach Anspruch 1, dadurch gekennzeichnet, daß eine die Temperatur des Referenzelementes (7, 7') erfassende Einrichtung vorgesehen ist.

3. Meßgerät nach Anspruch 1 oder 2, dadurch gekennzeichnet, daß als ersten und zweiten Detektor (5, 6) wechsellicht-empfindliche Detektoren verwendbar sind.

4. Vorrichtung nach Anspruch 3, dadurch gekennzeichnet, daß in den Strahlengang zwischen dem optischen System (4) und den Detektoren (5, 6) ein optischer Modulator (8) vorgesehen ist, der wenigstens einen strahlungsdurchlässigen und einen strahlungsundurchlässigen Bereich aufweist.

**5.** Meßgerät nach Anspruch 4, dadurch gekennzeichnet, daß der strahlungsundurchlässige Bereich (Modulatorscheibe 9) des optischen Modulators (8) ein Trägermaterial aus Polyethylene Terephthalate aufweist, das sowohl auf der strahlungszugewandten als auch auf der strahlungsabgewandten Seite mit einem metallischen Material beschichtet ist.

**6.** Meßgerät nach Anspruch 4 oder 5, dadurch gekennzeichnet, daß der optische Modulator 8 mittels eines Miniatur-Rotations-Schrittmotors (10) antreibbar ist.

**7.** Meßgerät nach Anspruch 1 oder 2, dadurch gekennzeichnet, daß für den ersten und zweiten Detektor gleichlichtempfindliche Detektoren verwendbar sind.

**8.** Meßgerät nach einem der vorhergehenden Ansprüche, gekennzeichnet durch einen Digital-Analog-Umsetzer (11), der der die Ausgangssignale der beiden Detektoren (5, 6) verarbeitenden Einrichtung nachgeschaltet ist, enthaltend

- eine Referenzquelle ($U_{Ref}$),

- wenigstens zwei benachbarte Schaltstufen (12a, 12b, 12c, 12d) mit wenigstens einem Widerstand ($R_1$, $R_2$) und einem Schalter (13a, 13b, 13c, 13d)

- sowie ein ein Ausgangssignal ($U_a$) erzeugender Strom-Spannungs-Wandler (14),

wobei das Verhältnis benachbarter Schaltstufen kleiner als 1 : 2 ist.

## Claims

**1.** Measuring device (1, 1') for measuring the electromagnetic radiation emitted by an object, particularly a pyrometer, with

a) a first detector (5),

b) an optical system (4) for delivering the radiation to the first detector,

c) a second detector (6),

d) a reference element (7, 7') from which emanating reference radiation falls onto the second detector,

e) and a device which processes output signals from the two detectors (5, 6) by formation of the difference,

characterised in that

f) the two detectors (5, 6), the optical system (4) and the reference element (7, 7') are disposed in a housing (3) having an inlet opening (2), the reference radiation emanating from the reference element (7, 7') being passed through the optical system (4) to the second detector (6).

**2.** Measuring device as claimed in Claim 1, characterised in that a device is provided which detects the temperature of the reference element (7, 7').

**3.** Measuring device as claimed in Claim 1 or 2, characterised in that detectors which are sensitive to alternating light can be used as first and second detectors (5, 6).

**4.** Device as claimed in Claim 3, characterised in that an optical modulator (8) which has at least one radiation-permeable and one radiation-impermeable region is provided in the beam path between the optical system (4) and the detectors (5, 6).

**5.** Measuring device as claimed in Claim 4, characterised in that the radiation-impermeable region (modulator disc 9) of the optical modulator (8) has a substrate material made from polyethylene terephthalate which is coated with a metal material both on the side facing the radiation and on the side facing away from the radiation.

**6.** Measuring device as claimed in Claim 4 or 5, characterised in that the optical modulator (8) can be driven by means of a miniature rotary stepping motor (10).

**7.** Measuring device as claimed in Claim 1 or 2, characterised in that detectors which are sensitive to constant light can be used for the first and second detectors.

**8.** Measuring device as claimed in one of the preceding claims, characterised by a digital/analogue converter (11) which is disposed after the device which processes the output signals from the two detectors (5, 6), the said converter comprising

- a reference source ($U_{Ref}$),

- at least two adjacent switching stages (12a, 12b, 12c, 12d) with at least one resistance ($R_1$, $R_2$) and a switch (13a, 13b, 13c, 13d)

- and a current/voltage converter (14) which produces an output signal ($U_a$),

the ratio between adjacent switching stages being smaller than 1 : 2.

## Revendications

1.  Appareil (1, 1') de mesure de la radiation électromagnétique émise par un objet, en particulier pyromètre, comprenant

    a) un premier détecteur (5),
    b) un système optique (4) destiné à diriger la radiation sur le premier détecteur,
    c) un second détecteur (6),
    d) un élément de référence (7, 7') dont la radiation de référence qu'il émet est incidente sur le second détecteur,
    e) ainsi qu'un dispositif de traitement des signaux de sortie des deux détecteurs (5, 6) par formation d'une différence,

    caractérisé en ce que
    f) les deux détecteurs (5, 6), le système optique (4) et l'élément de référence (7, 7') sont disposés dans un boîtier (3) comportant un orifice d'entrée (2), la radiation de référence émise par l'élément de référence (7, 7') étant dirigée par le système optique (4) sur le second détecteur (6).

2.  Appareil de mesure selon la revendication 1, caractérisé en ce qu'un dispositif détectant la température de l'élément de référence (7, 7') est prévu.

3.  Appareil de mesure selon la revendication 1 ou 2, caractérisé en ce que les détecteurs qui sont utilisables en premier et second détecteurs (5, 6) sont sensibles à une lumière variable.

4.  Dispositif selon la revendication 3, caractérisé en ce qu'un modulateur optique (8) prévu dans la marche de la radiation entre le système optique (4) et les détecteurs (5, 6) comprend au moins une partie perméable à la radiation et une partie imperméable à la radiation.

5.  Appareil de mesure selon la revendication 4, caractérisé en ce que la partie du modulateur optique (8) (disque modulateur 9) qui est imperméable à la radiation comprend une matière de support en téréphthalate de polyéthylène dont aussi bien le côté tourné vers la radiation que le côté tourné à l'opposé de la radiation sont revêtus d'un matériau métallique.

6.  Appareil de mesure selon la revendication 4 ou 5, caractérisé en ce que le modulateur optique (8) est commandé par un moteur miniature à rotation pas à pas (10).

7.  Appareil de mesure selon la revendication 1 ou 2, caractérisé en ce que des détecteurs sensibles à une lumière constante son utilisables pour les premier et second détecteurs.

8.  Appareil de mesure selon l'une des revendications précédentes, caractérisé par un convertisseur numérique-analogique (11), qui est monté en aval du dispositif traitant les signaux de sortie des deux convertisseurs (5, 6), comprenant

    -   une source de référence ($U_{ref}$)
    -   au moins deux étages voisins de commutation (12a, 12b, 12c, 12d) comprenant au moins une résistance ($R_1$, $R_2$) et un commutateur (13a, 13b, 13c, 13d),
    -   ainsi qu'un convertisseur de courant en tension (14) qui génère un signal de sortie ($U_a$),

    le rapport des étages voisins de commutation étant inférieur à 1 : 2.

EP 0 617 263 B1

$U_2$

$U_1$

Fig.1

Fig.2

EP 0 617 263 B1

Fig. 3

Fig.4